# EUROPÄISCHE PATENTSCHRIFT

(11) **EP 0 717 873 B1**
(45) Veröffentlichungstag und Bekanntmachung des Hinweises auf die Patenterteilung: **12.05.1999**
(21) Anmeldenummer: 94926084.8
(22) Anmeldetag: 06.09.1994
(51) Int. Cl.: G11B 17/22, G11B 33/04

(54) **WIEDERGABE- UND/ODER AUFZEICHNUNGSGERÄT FÜR PLATTEN**
PLAY-BACK AND/OR RECORDING DEVICE FOR DISKS
APPAREIL DE REPRODUCTION ET/OU D'ENREGISTREMENT DE DISQUES

(30) Priorität: 08.09.1993 DE 4330311
(43) Veröffentlichungstag der Anmeldung: 26.06.1996
(73) Patentinhaber: NSM AKTIENGESELLSCHAFT, 55411 Bingen (DE)
(72) Erfinder: MENKE, Wilhelm, D-55411 Bingen (DE); HEIDERSBERGER, Börge, D-55411 Bingen (DE)
(74) Vertreter: Becker, Bernd, Dipl.-Ing.
(86) Internationale Anmeldenummer: DE9401031
(87) Internationale Veröffentlichungsnummer: WO9507531

(56) Entgegenhaltungen:
- EP-A- 0 536 582
- WO-A-93/08569
- WO-A-93/11535
- WO-A-93/14499
- GB-A- 2 232 524
- US-A- 4 817 070
- US-A- 4 907 889
- US-A- 4 945 429
- US-A- 5 206 845

## Beschreibung

Die Erfindung bezieht sich auf ein Wiedergabe- und/oder Aufzeichnungsgerät für Platten mit
- einem Gehäuse,
- einem in übereinanderliegenden Aufnahmefächern Plattenhalter mit Platten aufnehmenden Plattenmagazin, das schubladenförmig auswechselbar angeordnet ist,
- mindestens zwei Laufwerken zum Auslesen oder Einschreiben von Informationen von der bzw. auf die Platte,
- einer in Stapelrichtung des Plattenmagazins verfahrbaren Transporteinrichtung zur wahlweisen Beförderung der einzelnen Platte mit dem Plattenhalter zwischen beliebigen Aufnahmefächern und dem einen oder anderen Laufwerk, wobei die Laufwerke schubladenförmig übereinander in der Ebene des Plattenmagazins diesem gegenüberliegend neben der Transporteinrichtung auswechselbar angeordnet sind.

Ein derartiges Wiedergabe- und/oder Aufzeichnungsgerät für Platten ist aus der US-PS 4,817,070 bekannt. Die Laufwerke sind als Einheit in ein Trägergehäuse übereinander in der Ebene der Plattenmagazine diesen gegenüberliegend neben der Transporteinrichtung angeordnet. Die Laufwerke und die Plattenmagazine sind gewissermaßen schubladenförmig auswechselbar im Trägergehäuse eingesetzt.

Die WO 93/08569 offenbart ein Wiedergabegerät für optische Platten mit einem Plattenmagazin und einem Laufwerk, die nebeneinander angeordnet sind. Die einzelnen Platten sind jeweils in einer Kassette untergebracht, und die Kassetten sind nebeneinanderliegend in das auf seiner Oberseite mit einem festen Traggriff versehene Plattenmagazin eingesetzt. Ferner zeigt die WO 93/14499 ein Plattenabspielgerät mit mindestens einem auswechselbar in dem Gehäuse des Gerätes angeordneten Plattenmagazin, das über eine Verriegelungseinrichtung mit dem Gehäuse in seiner Position festgelegt ist. Zur vereinfachten Handhabung des Austausches des Plattenmagazins ist das Plattenmagazin von der Vorderseite des Gehäuses aus schubladenartig in das Gehäuse eingesetzt.

Der Erfindung liegt die Aufgabe zugrunde, ein Wiedergabe- und/oder Aufzeichnungsgerät der eingangs genannten Art zuschaffen, das bei leichter Zugänglichkeit der Laufwerke und des mindestens einen Plattenmagazins einen besonders einfachen Transport des Plattenmagazins ermöglicht.

Diese Aufgabe wird erfindungsgemäß bei einem Wiedergabe- und/oder Aufzeichnungsgerät für Platten der eingangs genannten Art dadurch gelöst, daß das Plattenmagazin auf seiner Oberseite mit einem umlegbaren Traggriff versehen ist.

Durch diese Maßnahme wird eine einfache und leichte Handhabung des Plattenmagazins erreicht, d.h. das Plattenmagazin kann bequem Transportiert werden. Durch die Umlegbarkeit des Traggriffes ist kein nennenswerter zusätzlicher Einbauraum für das Plattenmagazin erforderlich.

Damit das Abspielen und Lagern einer einzelnen, nicht in dem Plattenmagazin vorhandenen Platte ohne ein entsprechendes Auswechseln in dem Plattenmagazin auf einfache Weise durchgeführt werden kann, ist nach einer vorteilhaften Ausgestaltung des Erfindungsgegenstandes mindestens ein einen Plattenhalter mit der Platte aufnehmendes Lade-Schubfach in einen Turm von Laufwerken integriert, von dem aus der Plattenhalter mit der Platte mittels der Transporteinrichtung in eines der Laufwerke oder zu einem freien Aufnahmefach im Plattenmagazin beförderbar ist. Demnach kann eine nicht in dem Plattenmagazin vorhandene Platte für sich bespielt oder abgespielt und gegebenenfalls anschließend in dem Plattenmagazin abgelegt werden. Selbstverständlich kann auch mit Hilfe des Lade-Schubfaches eine in dem Plattenmagazin vorhandene Platte gegen eine andere Platte ausgetauscht werden. Zur Erleichterung der Wartungsarbeiten an dem Lade-Schubfach ist zweckmäßigerweise das Lade-Schubfach auswechselbar im Gehäuse angeordnet.

Um die Möglichkeit des gleichzeitigen Angebotes unterschiedlicher Musikstücke an verschiedenen Stellen weiter zu erhöhen, ist nach einer vorteilhaften Weiterbildung der Erfindung entsprechend der Höhe des Plattenmagazins eine entsprechende Anzahl von übereinanderliegenden Laufwerken vorgesehen. In diesem Falle stimmt also die Höhe des Turmes der Laufwerke zumindest annähernd mit der Höhe des Wiedergabe- und/oder Aufzeichnungsgerätes überein, wodurch sich eine optimale Raumausnutzung des Gehäuses ergibt.

Zwecks Erhöhung der in dem Wiedergabe- und/oder Aufzeichnungsgerät zur Verfügung gestellten Platten ist bei einer weiteren Ausgestaltung des Wiedergabe- und/oder Aufzeichnungsgerätes oberhalb des Plattenmagazins und/oder oberhalb des Turmes der Laufwerke mindestens jeweils ein weiteres Plattenmagazin vorgesehen. Zur weiteren Erhöhung des Plattenangebots ist bevorzugt unterhalb des Plattenmagazins und/oder unterhalb des Turmes der Laufwerke mindestens jeweils ein weiteres Plattenmagazin angeordnet. Auf diese Weise läßt sich ein äußerst kompaktes Wiedergabe- und/oder Aufzeichnungsgerät mit mehreren hundert Platten verwirklichen, wenn man davon ausgeht, daß jedes Plattenmagazin fünfzig Platten enthält. Bevorzugt sind die Plattenmagazine von der Vorderseite, der Rückseite oder der Seite des Gehäuses her in das Gehäuse eingesetzt.

Um bespielte und unbespielte Platten oder Platten bestimmter Musikrichtung im Plattenmagazin leicht unterscheiden zu können, sind nach einer Weiterbildung der Erfindung die Plattenhalter farblich unterschiedlich ausgeführt. Weiterhin sind bevorzugt die Plattenmagazine farblich unterschiedlich gestaltet. So ergibt sich die Möglichkeit, Plattenmagazine unterschiedlichen Inhalts, wie z.B. Abrechnungsmagazine, Bibliotheksmagazine und dergleichen, optisch leicht zu erkennen.

Der der Erfindung zugrundeliegende Gedanke wird in der nachfolgenden Beschreibung anhand mehrerer Ausführungsbeispiele, die in der Zeichnung dargestellt sind, näher erläutert. Es zeigt:
- Fig. 1: eine perspektivische Ansicht eines Wiedergabe- und/oder Aufzeichnungsgerätes nach der Erfindung,
- Fig. 2: eine alternative Ausführung des Wiedergabe- und/oder Aufzeichnungsgerätes nach Fig. 1 und
- Fig. 3: eine weitere alternative Ausführung des Wiedergabe- und/oder Aufzeichnungsgerätes nach Fig. 1.

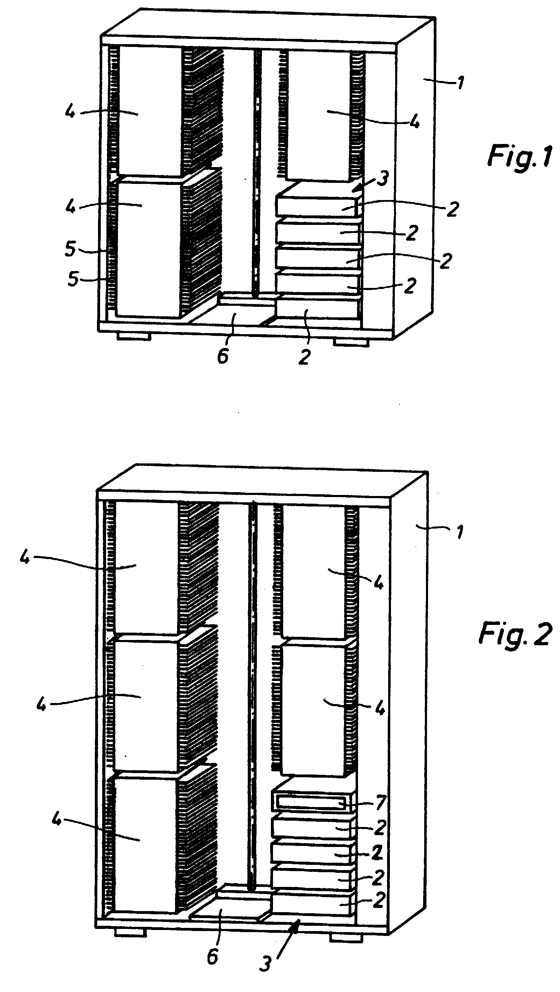

Das Wiedergabe- und/oder Aufzeichnungsgerät, durch das sowohl auf Platten gespeicherte Informationen, insbesondere Musikdarbietungen, optisch ausgelesen und wiedergegeben als auch Informationen auf Platten eingeschrieben werden können, besitzt ein Gehäuse 1 mit einer nicht dargestellten Bedienungstafel, die verschiedene, mit einer zentralen Steuereinheit verbundene Tasten aufweist, beispielsweise eine Plattenauswahltaste, eine Plattenabspieltaste und eine Stopptaste. Bei dem Wiedergabe- und/oder Aufzeichnungsgerät nach Fig. 1 befinden sich in der rechten unteren Hälfte des Gehäuses 1 fünf übereinander angeordnete Laufwerken 2 zum Auslesen oder Einschreiben von Informationen von einer bzw. auf eine Platte. Die Laufwerke 2 können als Photo-, CDR-, CD-Audio-, CD-recordable- oder MOD-Laufwerk ausgebildet sein. Jedes Laufwerk 2 ist in nicht dargestellten Führungen schubladenförmig gelagert und damit auswechselbar. Dem Turm 3 der Laufwerke 2 steht auf der anderen Seite des Gehäuses 1 ein Plattenmagazin 4 gegenüber, das eine Vielzahl übereinanderliegend angeordneter Aufnahmefächer für die Lagerung einer entsprechenden Anzahl an je eine Platte aufnehmender Plattenhalter 5 besitzt. Sowohl oberhalb des Plattenmagazins 4 als auch oberhalb des Turmes 3 der Laufwerke 2 ist jeweils ein weiteres, identisch aufgebautes Plattenmagazin 4 angeordnet. Sämtliche Plattenmagazine 4, die auf ihrer Oberseite jeweils einen umlegbaren Traggriff aufweisen, sind schubladenförmig auswechselbar in das Gehäuse 1 eingesetzt. In dem Raum zwischen den beiden übereinanderliegenden Plattenmagazinen 4 und dem Turm 3 der Laufwerke 2 mit dem darüberliegenden Plattenmagazin 4 befindet sich eine auf- und abverfahrbare Transporteinrichtung 6 für einen eine Platte aufnehmenden Plattenhalter 5. Mittels der Transporteinrichtung 6 sind die Plattenhalter 5 wahlweise zwischen beliebigen Aufnahmefächern und einem beliebigen Laufwerk 2 transportierbar.

Der aus fünf Laufwerke 2 bestehende Turm 3 weist eine Höhe auf, die der Höhe des gegenüberliegenden Plattenmagazins 4 entspricht, d.h. der Raumbedarf des Laufwerke-Turmes 3 deckt sich praktisch mit dem Raumbedarf des Plattenmagazins 4, wodurch sich letztendlich ein kompakter Gesamtaufbau des Wiedergabe- und/oder Aufzeichnungsgerätes bei gleichzeitig gegebener relativ hoher Anzahl an Laufwerken 2 ergibt. Im übrigen können die Laufwerke 2 im Falle beidseitig bespielter oder einschreibbarer Platten für das Abspielen bzw. Auslesen beider Plattenseiten ausgelegt sein.

Bei dem in Fig. 2 gezeigten Wiedergabe- und/oder Aufzeichnungsgerät ist in den Turm 3 der Laufwerke 2 ein einen Plattenhalter 5 mit einer Platte aufnehmendes Lade-Schubfach 7 integriert, d.h. das obere Laufwerk 2 ist durch das Lade-Schubfach 7 ersetzt, so daß nunmehr der Turm 3 vier Laufwerke 2 und ein Lade-Schubfach 7 umfaßt. Das Lade-Schubfach7 nimmt einen mit einer Platte bestückten Plattenhalter 5 auf, der im eingeschobenen Zustand des Lade-Schubfaches 7 von der Transporteinrichtung 6 erfaßt werden kann. Im herausgezogenen Zustand des Lade-Schubfaches 7 kann eine Platte leicht von Hand ausgewechselt werden. In diesem Falle befinden sich oberhalb des dem Turm 3 gegenüberliegenden Plattenmagazins 4 zwei weitere Plattenmagazine 4 und oberhalb des Turmes 3 ebenfalls zwei weitere Plattenmagazine 4, wodurch die Plattenspeicherkapazität wesentlich erhöht ist.

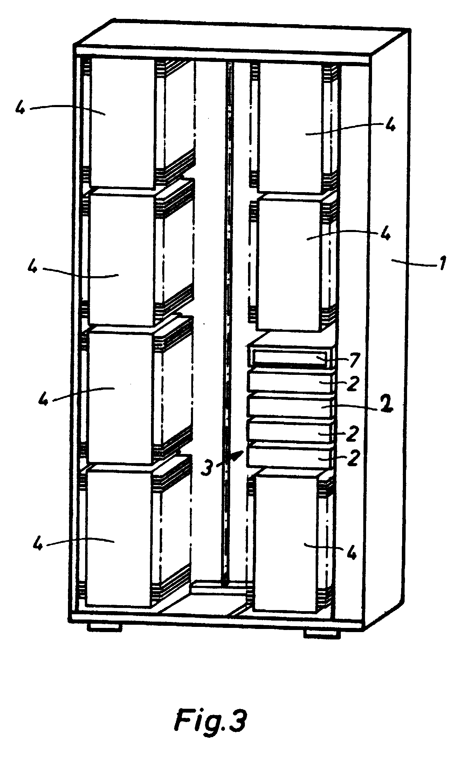

Eine weitere Steigerung der Plattenspeicherkapazität ist bei dem in Fig. 3 dargestellten Wiedergabe- und/oder Aufzeichnungsgerätes verwirklicht. In diesem Falle sind oberhalb des aus vier Laufwerken 2 und einem Lade-Schubfach 7 zusammengesetzten Turmes 3 zwei Plattenmagazine 4 übereinander und unterhalb des Turmes 3 ein Plattenmagazin 4 angeordnet. Dementsprechend befinden sich oberhalb des dem Turm 3 gegenüberliegenden Plattenmagazins 4 zwei weitere übereinanderlegende Plattenmagazine 4 und unterhalb desselben ein weiteres Plattenmagazin 4.

## Patentansprüche

1. Wiedergabe- und/oder Aufzeichnungsgerät für Platten mit
- einem Gehäuse (1),
- mindestens einem in übereinanderliegenden Aufnahmefächern Plattenhalter (5) mit Platten aufnehmenden Plattenmagazin (4), das schubladenförmig auswechselbar angeordnet ist,
- mindestens zwei Laufwerken (2) zum Auslesen oder Einschreiben von Informationen von der bzw. auf die Platte,
- einer in Stapelrichtung des Plattenmagazins (4) verfahrbaren Transporteinrichtung (6) zur wahlweisen Beförderung der einzelnen Platte mit dem Plattenhalter (5) zwischen beliebigen Aufnahmefächern und dem einen oder anderen Laufwerk (2), wobei die Laufwerke (2) schubladenförmig übereinander in der Ebene des Plattenmagazins (4) diesem gegenüberliegend neben der Transporteinrichtung (6) auswechselbar angeordnet sind,
dadurch gekennzeichnet, daß das Plattenmagazin (4) auf seiner Oberseite mit einem umlegbaren Traggriff versehen ist.

2. Wiedergabe- und/oder Aufzeichnungsgerät nach Anspruch 1, dadurch gekennzeichnet, daß mindestens ein einen Plattenhalter (5) mit der Platte aufnehmendes Lade-Schubfach (7) in einen Turm (3) von Laufwerken (2) integriert ist, von dem aus der Plattenhalter (5) mit der Platte mittels der Transporteinrichtung (6) zu einem der Laufwerke (2) oder zu einem freien Aufnahmefach im Plattenmagazin (4) beförderbar ist.

3. Wiedergabe- und/oder Aufzeichnungsgerät nach Anspruch 2, dadurch gekennzeichnet, daß das Lade-Schubfach (7) auswechselbar im Gehäuse (1) angeordnet ist.

4. Wiedergabe- und/oder Aufzeichnungsgerät nach einem der Ansprüche 1 bis 3, dadurch gekennzeichnet, daß entsprechend der Höhe des Plattenmagazins (4) eine entsprechende Anzahl von übereinanderliegenden Laufwerken (2) vorgesehen ist.

5. Wiedergabe- und/oder Aufzeichnungsgerät nach einem der Ansprüche 1 bis 4, dadurch gekennzeichnet, daß oberhalb des Plattenmagazins (4) und/oder oberhalb des Turmes (3) der Laufwerke (2) mindestens jeweils ein weiteres Plattenmagazin (4) vorgesehen ist.

6. Wiedergabe- und/oder Aufzeichnungsgerät nach einem der Ansprüche 1 bis 5, dadurch gekennzeichnet, daß unterhalb des Plattenmagazins (4) und/oder unterhalb des Turmes (3) der Laufwerke mindestens jeweils ein weiteres Plattenmagazin (4) angeordnet ist.

7. Wiedergabe- und/oder Aufzeichnungsgerät nach einem der Ansprüche 1 bis 6, dadurch gekennzeichnet, daß die Plattenmagazine (4) von der Vorderseite, der Rückseite oder der Seite des Gehäuses (1) her in das Gehäuse (1) eingesetzt sind.

8. Wiedergabe- und/oder Aufzeichnungsgerät nach einem der Ansprüche 1 bis 7, dadurch gekennzeichnet, daß die Plattenhalter (5) farblich unterschiedlich ausgeführt sind.

9. Wiedergabe- und/oder Aufzeichnungsgerät nach einem der Ansprüche 1 bis 8, dadurch gekennzeichnet, daß die Plattenmagazine (4) farblich unterschiedlich gestaltet sind.

## Claims

1. Playback and/or recording apparatus for discs, including
- a housing (1),
- at least one disc magazine (4), which accommodates disc holders (5), provided with discs, in accommodation compartments which lie above one another, said magazine being interchangeably disposed in a drawer-like manner,
- at least two drive assemblies (2) for reading data from the disc or for recording data on the disc, and
- a conveyor (6), which is displaceable in the stacking direction of the disc magazine (4), for the selective conveyance of the individual disc with the disc holder (5) between any desirable accommodation compartments and one or other drive assembly (2), the drive assemblies (2) being interchangeably disposed in a drawer-like manner above one another in the plane of the disc magazine (4) opposite said magazine adjacent the conveyor (6),
characterised in that the disc magazine (4) is provided on its upper side with a foldable carrying handle.

2. Playback and/or recording apparatus according to claim 1, characterised in that at least one loading sliding compartment (7), which accommodates a disc holder (5) provided with the disc, is incorporated in a tower (3) of drive assemblies (2), from which tower the disc holder (5), provided with the disc, is conveyable by means of the conveyor (6) to one of the drive assemblies (2) or to a free accommodation compartment in the disc magazine (4).

3. Playback and/or recording apparatus according to claim 2, characterised in that the loading sliding compartment (7) is interchangeably disposed in the housing (1).

4. Playback and/or recording apparatus according to one of claims 1 to 3, characterised in that a corresponding number of drive assemblies (2), which lie above one another, is provided to correspond to the height of the disc magazine (4).

5. Playback and/or recording apparatus according to one of claims 1 to 4, characterised in that at least one additional respective disc magazine (4) is provided above the disc magazine (4) and/or above the tower (3) of the drive assemblies (2).

6. Playback and/or recording apparatus according to one of claims 1 to 5, characterised in that at least one additional respective disc magazine (4) is disposed beneath the disc magazine (4) and/or beneath the tower (3) of the drive assemblies.

7. Playback and/or recording apparatus according to one of claims 1 to 6, characterised in that the disc magazines (4) are inserted into the housing (1) from the front side, the rear side or the side of the housing (1).

8. Playback and/or recording apparatus according to one of claims 1 to 7, characterised in that the disc holders (5) are differently coloured.

9. Playback and/or recording apparatus according to one of claims 1 to 8, characterised in that the disc magazines (4) are formed from different colours.

## Revendications

1. Appareil de reproduction et/ou d'enregistrement pour disques comportant
- un boîtier (1),
- au moins un magasin à disques (4) recevant, dans des cases de réception superposées, des porte-disques (5) avec des disques, lequel magasin à disques est monté interchangeable à la manière d'un tiroir,
- au moins deux platines (2) pour la lecture ou l'enregistrement d'informations sur le disque,
- un dispositif de transport (6), déplaçable dans la direction d'empilement du magasin à disques (4), pour transporter sélectivement le disque individuel avec le porte-disque (5) entre des cases de réception quelconques et l'une ou l'autre platine (2), les platines (2) étant montées interchangeables à la manière d'un tiroir, l'une au-dessus de l'autre, dans le plan du magasin à disques (4), face à celui-ci à côté du dispositif de transport (6),
caractérisé en ce que le magasin à disques (4) est pourvu sur sa face supérieure d'une poignée de portage repliable.

2. Appareil de reproduction et/ou d'enregistrement selon la revendication 1, caractérisé en ce qu'au moins un tiroir de chargement (7) recevant un porte-disque (5) avec le disque est intégré dans une tour (3) de platines (2), à partir duquel le porte-disque (5) avec le disque est transportable, au moyen du dispositif de transport (6) vers l'une des platines (2) ou vers une case de réception libre dans le magasin à disques (4).

3. Appareil de reproduction et/ou d'enregistrement selon la revendication 2, caractérisé en ce que le tiroir de chargement (7) est monté interchangeable dans le boîtier (1).

4. Appareil de reproduction et/ou d'enregistrement selon l'une des revendications 1 à 3, caractérisé en ce qu'en fonction de la hauteur du magasin à disques (4) est prévu un nombre correspondant de platines (2) superposées.

5. Appareil de reproduction et/ou d'enregistrement selon l'une des revendications 1 à 4, caractérisé en ce qu'au-dessus du magasin à disques (4) et/ou au-dessus de la tour (3) des platines (2) est prévu chaque fois au moins un autre magasin à disques (4).

6. Appareil de reproduction et/ou d'enregistrement selon l'une des revendications 1 à 5, caractérisé en ce qu'au-dessous du magasin à disques (4) et/ou au-dessous de la tour (3) des platines est disposé chaque fois au moins un autre magasin à disques (4).

7. Appareil de reproduction et/ou d'enregistrement selon l'une des revendications 1 à 6, caractérisé en ce que les magasins à disques (4) sont insérés dans le boîtier (1) à partir de la face avant, de la face arrière ou du côté du boîtier (1).

8. Appareil de reproduction et/ou d'enregistrement selon l'une des revendications 1 à 7, caractérisé en ce que les porte-disques (5) sont réalisés dans des couleurs différentes.

9. Appareil de reproduction et/ou d'enregistrement selon l'une des revendications 1 à 8, caractérisé en ce que les magasins à disques (4) sont réalisés dans des couleurs différentes.
